# EUROPEAN PATENT APPLICATION

(11) **EP 1 953 749 A1**
(43) Date of publication of application: **06.08.2008**
(21) Application number: 08150673.5
(22) Date of filing: 25.01.2008
(51) Int. Cl.: G11B 7/135

(54) **Optical head unit and optical disc drive**

(30) Priority: 31.01.2007 JP 2007022366
(71) Applicant: Kabushiki Kaisha Toshiba, Minato-ku, Tokyo 105-8001 (JP)
(72) Inventor: Iwata, Katsuo Toshiba Corporation, Tokyo 105-8001 (JP); Okano, Hideaki Toshiba Corporation, Tokyo 105-8001 (JP); Nagata, Kazuhiro Toshiba Corporation, Tokyo 105-8001 (JP)
(74) Representative: Henkel, Feiler & Hänzel

(57) **Abstract**

An optical pickup apparatus according to an embodiment of the invention includes two or more light sources (21, 23, 121, 123, 125), an objective lens (31) which condenses the light beam having the predetermined wavelength output from each of the light sources to a recording layer of a recording medium, and captures a light beam reflected on the recording layer of the recording medium, a polarization control element (39) arranged between the light sources and the objective lens, to optimize directions of polarization of the light beam having the predetermined wavelength output from the light source and the light beam reflected on the recording layer of the recording medium, in accordance with the wavelength thereof, on the basis of a voltage to be applied, a photodetector (43) which receives the reflected light beam captured by the objective lens and outputs a predetermined signal, and a polarization control circuit (6) which varies the direction of polarization set by the polarization control element, in accordance with the output of the photodetector.

## Description

The present invention relates to an optical disc drive capable of recording information on plural kinds of optical discs different in record density and standard and reproducing information from the optical discs, and an optical head apparatus installed in the optical disc drive.

An optical disc capable of having information recorded thereon in no-contact manner using a light beam or reproducing recorded information, and an optical disc drive capable of recording on the optical disc or reproducing information from the optical disc have been commercialized for a long time. Optical discs of plural kinds of record densities called CD Standard and DVD Standard have already been widespread.

Recently, an ultrahigh density optical disc (High Definition Digital Versatile Disc; hereinafter called HD DVD) capable of storing both image data of the HD Standard and high-quality surround audio data by using a blue or purple light beam of a short wavelength for the reproduction of the information recorded in a recording layer has also been commercialized.

Due to emergence of such plural kinds of optical discs, a single optical head apparatus capable of recording information on each of optical discs of three standards including optical discs of the HD DVD Standard or reproducing information from each of the optical discs is required.

However, if three beams having different wavelengths as used for HD DVD, DVD and CD, respectively, are to be used in a common optical path, a wavelength plate corresponding to the three wavelengths is required and maintaining more than predetermined characteristics for the light beams of all the wavelengths is difficult. For example, it is known that the S/N of the light beam for HD DVD becomes lowered.

Japanese Patent Application Publication (KOKAI) No. 2006-268899 discloses that to provide an optical pickup device capable of properly recording and/or reproducing information for different optical information storage media, a liquid crystal optical element is provided at polarization status setting means and a luminous flux is selectively emitted by applying a drive voltage to the liquid crystal optical element from the outside.

However, the method disclosed in the Publication can respond to different optical information storage media by using two sets of an objective lens and a photodetector and further providing a photodetector for monitoring. However, the publication does not disclose a method of enhancing the S/N of the light beam for a specific optical information recording medium having a low level of the reproduction signal and the S/N which can easily be lowered, for example, an HD DVD optical disc, or a method of maintaining more than certain characteristics to the light beams of all the wavelengths.

An object of the invention is to provide an optical disc drive and optical head apparatus incorporated in the same capable of recording information on three kinds of arbitrary optical discs having different record densities or reproducing the information from the optical discs by light beams of three different wavelengths, such that the use efficiency of all the light beams can be increased and the S/N irrespective of the kind of optical discs can be enhanced.

According to an aspect of the invention, there is provided an optical head unit characterized by comprising: two or more light sources (21, 23, 121, 123, 125), an objective lens (31) which condenses the light beam having the predetermined wavelength output from each of the light sources to a recording layer of a recording medium, and captures a light beam reflected on the recording layer of the recording medium, a polarization control element (39) arranged between the light sources and the objective lens, to optimize directions of polarization of the light beam having the predetermined wavelength output from the light source and the light beam reflected on the recording layer of the recording medium, in accordance with the wavelength thereof, on the basis of a voltage to be applied, a photodetector (43) which receives the reflected light beam captured by the objective lens and outputs a predetermined signal, and a polarization control circuit (6) which varies the direction of polarization set by the polarization control element, in accordance with the output of the photodetector.

The invention can be more fully understood from the following detailed description when taken in conjunction with the accompanying drawings, in which:
FIG. 1 is an exemplary diagram showing an example of an optical disc drive according to an embodiment of the invention;
FIG. 2 is an exemplary diagram showing an example of an active polarization converting element in the PUH of the optical disc drive shown in FIG. 1 according to the embodiment of the invention; and
FIG. 3 is an exemplary diagram showing an example of an optical disc drive according to an embodiment of the invention.

Embodiments of the invention will be explained in detail hereinafter with reference to the accompanying drawings.

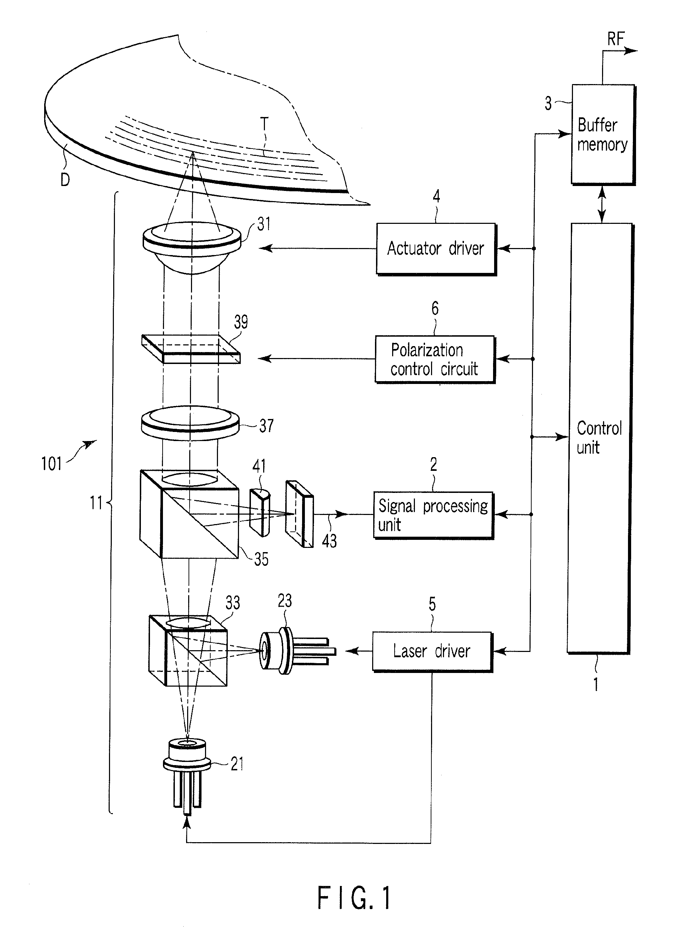

FIG. 1 shows an example of a configuration of an information recording and reproducing device (optical disc drive) according to the embodiment of the present invention.

An optical disc drive 101 shown in FIG. 1 includes an optical head apparatus (hereinafter called PUH (pickup)) capable of recording information on a recording layer (not shown) which is formed at a predetermined position (layer) of an optical disc (recording medium) D and which is composed of, for example, an organic film, a metal film or a phase change film, reading the information recorded on the recording layer, or erasing the information recorded on the recording layer. Besides the PUH 11, the optical disc drive 101 includes a head moving mechanism (not shown) which radially moves the PUH 11 along the recording surface of the optical disc D, a mechanical element such as a disc motor or the like (not shown) which rotates the optical disc at a predetermined speed, a signal processing system to be described later, and the like, though not described in detail.

On the recording layer of the optical disc D, a guide groove, i.e. a track or recording mark (recorded data(pit/pits)) string is formed coaxially or spirally. The recorded data (recording mark) string may be molded integrally by, for example, embossing at the disc molding.

The PUH 11 includes first and second light sources (hereinafter called LD) 21 and 23 that are, for example, semiconductor laser elements, i.e. laser diodes, and an objective lens 31 which applies predetermined convergence to light beams output from the first and second LD 21 and 23. The objective lens 31 is formed of, for example, plastic and numerical aperture NA is, for example, 0.65.

The first LD 21 is aligned such that a main beam (axial light) of the output light beam is preferably in a direction orthogonal to the recording surface of the optical disc D, in a state excluding a mirror (not shown) and the like for changing the path of the light beam, though not described in detail.

The second LD 23 is overlapped on the optical path between the first LD 21 and the optical disc D, via a first splitter (mirror prism) 33 inserted at a predetermined position in the optical path extending from the first LD 21 to the optical disc D. The first LD 21 and the second LD 23 do not output the light beams, simultaneously.

The first splitter 33 is preferably a PBS (polarization beam splitter, i.e. polarization separating element) and a direction of the polarization of a polarization surface (mirror surface) thereof is aligned such that the polarization surface (mirror surface) allows a most part of the light beam output from the first LD 21 to pass therethrough and reflects a most part of the light beam output from the second LD 23, though not shown.

The wavelength of the light beam output from the first LD 21 is, for example, 400 to 410 nm and, preferably, 405 nm. The first LD 21 is utilized to record information on or reproduce information from an optical disc of the standard called HD DVD in which a pitch of the track or recording mark string provided on the recording layer is defined as approximately 0.4 µm.

The second LD 23 is an element capable of outputting light beams of two different wavelengths, i.e. an light beam having a wavelength of, for example, 650 to 660 nm and, preferable, 655 nm and a light beam having a wavelength of, for example, 770 to 790 nm and, preferable, 780 nm. The light beams of the two wavelengths are not output simultaneously.

The light beam having the wavelength of 655 nm as output from the second LD 23 is utilized to record information on or reproduce information from an optical disc of the standard called HD DVD in which a pitch of the track or recording mark string T provided on the recording layer is defined as approximately 0.74 µm. In addition, the light beam having the wavelength of 780 nm as output from the second LD 23 is utilized to record information on or reproduce information from an optical disc of the standard called HD DVD in which a pitch of the track or recording mark string T provided on the recording layer is defined as approximately 1.6 µm.

A collimator (lens) 35 configured to convert the light beam passed through the first splitter 33 (i.e. directed to the optical disc D) into parallel light, a second splitter (mirror prism, separating element) 37 configured to separate the light beam directed to the optical disc D and the light beam reflected on the recording layer of the optical disc D, an active polarization converting element (polarization control element) 39 having a polarization characteristic variable according to the wavelength of the light beam, directed to the optical disc D and the like, are aligned between the first splitter (PBS) 33 and the objective lens 31, in the order from the first splitter 33 side.

If necessary, a diffraction element (or a wavefront splitting element), for example, HOE (hologram optical element) configured to supply a predetermined wavefront characteristic to the light beam directed to the optical disc D and the light beam reflected on the recording layer of the optical disc, in accordance with a shape and alignment of a light receiving area of a photodetector to be described later, is provided at a predetermined position between the objective lens 31 and the PBS 33, though not shown.

The second splitter 37 includes a half-mirror or wavelength selection film which reflects and allows a certain quantity of each of the light beam having the wavelength of 405 nm as output from the first LD 21 and the light beam having the wavelength of 655 nm or 780 nm as output from the second LD 23 to pass therethrough, though not shown. The second splitter 37 thereby allows a predetermined quantity of the light beam directed to the recording layer of the optical disc D to pass therethrough and reflects a predetermined quantity of the light beam reflected on the recording layer of the optical disc D.

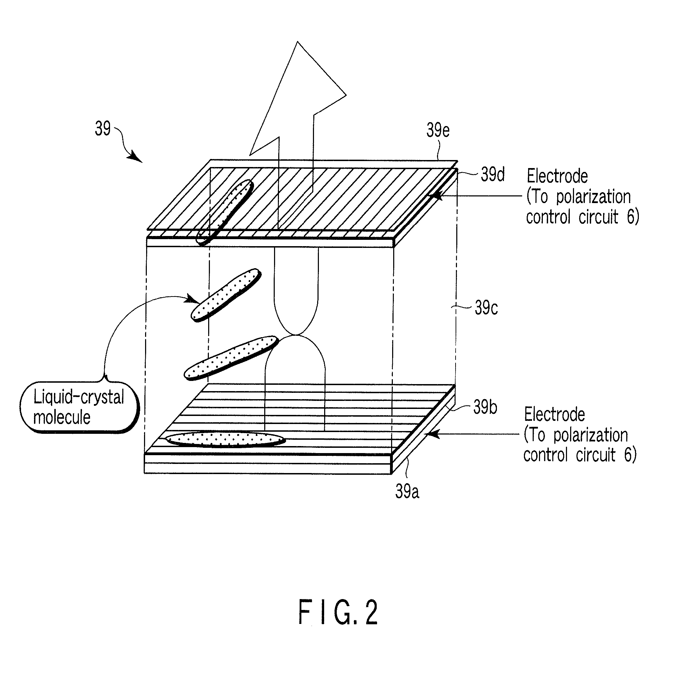

The active polarization converting element 39 is, for example, a twisted nematic (TN) type liquid-crystal element widely used for display devices and the like as described in FIG. 2. When a predetermined voltage is applied between electrodes 39a and 39e provided on a surface (for example, on the objective lens 31 side) and a back surface (for example, the PBS 33 side), respectively, a direction of the polarization of a liquid-crystal layer 39c prepared between two polarizing plates 39b and 39d can be set arbitrarily. Therefore, the isolation to the same degree as that in a case of independently providing λ/4 plates (wavelength plates) for the light beam having the wavelength of 405 nm, the light beam having the wavelength of 655 nm, and the light beam having the wavelength of 780 nm, respectively, can be provided to the light beam having each of the wavelengths.

An image-forming optical system 41 configured to supply a predetermined image-forming characteristic to the reflected light beam, a photodetector (hereinafter called PD) 43 configured to receive the reflected light beam to which the predetermined image-forming characteristic is supplied by the image-forming optical system 41 and output an output signal corresponding to light intensity of the reflected light beam, and the like, are aligned in order from the second splitter 37 side, in a direction in which the reflected light beam separated from the light beam directed to the optical disc D is guided by the second splitter 37.

In the PUH 11, an output signal of a predetermined mode is generated by a signal processing unit 2 configured to process an output of the PD 43 incorporated in the PUH 11. For example, an output of the signal processing unit 2 is first supplied to a buffer memory 3 configured to temporarily maintain the output of the signal processing unit 2 to obtain reproduction information, and then maintained. In addition, the output of the signal processing unit 2 is supplied to an actuator driver circuit 4 configured to generate a control signal for control of a position of the objective lens 31, i.e. actuator (not shown), and is utilized as a focus control signal or tracking control signal for change of the objective lens 31 maintained by the actuator.

The signal processing unit 2, the buffer memory 3 and the actuator driver circuit 4 are connected to the control unit 1 and operated under control of the control unit 1. Moreover, a laser driver circuit 5 configured to control the outputs of the first LD 21 and second LD 23, and a polarization control circuit 6 configured to control a voltage to be applied to the active polarization converting element 39 are also connected to the control unit 1.

The actuator driver circuit 4 is utilized to move the position of the actuator (not shown) maintaining the objective lens 11 inside the PUH 11 in a focal (optically axial) direction orthogonal to a surface including the recording layer of the optical disc D (i.e. to execute focus control) such that a distance between the objective lens 31 and the recording layer of the optical disc D matches a focal distance of the objective lens 31, and to move the objective lens 31 in a radial direction (of the optical disc D) orthogonal to a direction in which the track (record mark string) T of the recording layer extends (i.e. to execute tracking control).

The laser driver circuit 5 superimposes a record signal corresponding to information to be recorded, on a laser drive signal upon recording the information on the optical disc D, and sets predetermined light intensities of the first LD 21 and the second LD 23 upon reproducing the information from the optical disc D. In addition, the laser driver circuit 5 stabilizes the outputs of the first LD 21 and the second LD 23 by using an output signal from a monitoring optical system (not shown).

The polarization control circuit 6 controls the direction of polarization such that the polarization characteristic substantially matches λ/4 in correspondence with the wavelength of the light beam selected according to the kind, i.e. recording density of the optical disc D, between the electrodes 39a and 39e of the active polarization converting element 39.

A plurality of voltage values output from the polarization control circuit 6 may be prepared in a memory or the like (not shown), in accordance with the recording density (standard) of the optical disc, or the voltage value may be set for each disc by the control unit 1, such that the output signal output from the PD 43 (i.e. a sum signal of output from a predetermined light-receiving area, of the output of each of light-receiving areas, of the PD 43 or RF output) becomes maximum. The output (voltage value) of the polarization control circuit 6 may be set such that, for example, an index or detected value used upon evaluating the PUH represented by Jitter or the like becomes minimum.

In the optical disc drive 1 shown in FIG. 1, if the optical disc maintained on a turntable formed integrally with a disc motor (not shown) is, for example, under the HD DVD standard, the light beam having the wavelength of 405 nm is output from the first LD 21. At this time, a predetermined voltage is applied between the electrodes 39a and 39e, such that the active polarization converting element 39 functions as a λ/4 plate in which the direction of polarization is suitable for the light beam having the wavelength of 405 nm.

The light beam having the wavelength of 405 nm is passed through the PBS 33, collimated by the collimator 35, passed through the second splitter 37 and the active polarization converting element 39, and condensed in a predetermined spot size on the recording layer of the optical disc D by the objective lens 31.

The light beam reflected on the recording layer of the optical disc D is captured by the objective lens 31 and returned to the parallel light, which is passed through the active polarization converting element 39 and reflected to the PD 43 by the second splitter 37.

The reflected light beam directed to the PD 43 is given a predetermined image-forming characteristic by the image-forming optical system 41. As for the image-forming optical system 41, a well-known, arbitrary optical system for detection of a focus error of the objective lens 31 and a tracking error can be employed. As for a method of detecting a focus error, for example, knife edge, double prism (parallel prism), astigmatism and the like can be employed. As for a method of detecting a tracking error (displacement of the track center and the major ray condensed by the objective lens on the track), for example, DPD (Differential Phase Detection) can be applied with PP (Push Pull) or CPP (Compensated Push Pull).

By providing the active polarization converting element 39 at a predetermined position between the objective lens 31 and the PBS 33 and applying a predetermined voltage between the electrodes 39a and 39e, most parts of the light beam emitted from the first LD 21 and the light beam reflected on the recording layer of the optical disc D are efficiently passed through the active polarization converting element 39.

In addition, since the reflected light beam is passed through the second splitter 37 at a predetermined rate, a certain quantity of reflected light beam reaches the PBS 33. The reflected light beam is reflected at the PBS 33 and is rarely made incident on the first LD 21 again. Therefore, the intensity (quantity) of the light beam output from the first LD 21 is stably maintained together with restriction of a component inducing noise.

On the other hand, since the quantity of the reflected light beam reflected on the second splitter 37 and guided to the PD 43 also becomes substantially maximum, the S/N is enhanced (improved), and the reproduction signal from the optical disc of the HD DVD standard in which the intensity (quantity) of the reflected light beam can be lowered is also stabilized.

Similarly, if the optical disc maintained on the turntable formed integrally with the disc motor (not shown) is, for example, under the DVD standard, the light beam having the wavelength of 655 nm is output from a first light emitting unit (not described) of the second LD 23. At this time, a predetermined voltage is applied between the electrodes 39a and 39e such that the active polarization converting element 39 functions as a λ/4 plate in which the direction of polarization is suitable for the light beam having the wavelength of 655 nm.

The light beam having the wavelength of 655 nm is reflected at the PBS 33, collimated by the collimator 35, passed through the second splitter 37 and the active polarization converting element 39, and condensed in a predetermined spot size on the recording layer of the optical disc D by the objective lens 31.

The light beam reflected on the recording layer of the optical disc D is captured by the objective lens 31 and returned to the parallel light, which is passed through the active polarization converting element 39, reflected to the PD 43 by the second splitter 37, and given a predetermined image-forming characteristic by the image-forming optical system 41 to form an image on the PD 43.

By providing the active polarization converting element 39 at a predetermined position between the objective lens 31 and the PBS 33 and applying a predetermined voltage between the electrodes 39a and 39e, most parts of the light beam emitted from a first light emitting point of the second LD 23 and the light beam reflected on the recording layer of the optical disc D are efficiently passed through the active polarization converting element 39. In addition, since the reflected light beam is passed through the second splitter 37 at a predetermined rate, a certain quantity of reflected light beam reaches the PBS 33. However, since the reflected light beam passed through the splitter 37 is also passed through the PBS 33, the reflected light beam is rarely made incident on the second LD 23 again. Therefore, the intensity (quantity) of the light beam output from the second LD 23 is stably maintained together with restriction of a component inducing noise.

In addition, since the quantity of the reflected light beam reflected on the second splitter 37 and guided to the PD 43 also becomes substantially maximum, the S/N is enhanced (improved) and the reproduction signal from the optical disc is also stabilized.

If the optical disc maintained on the turntable formed integrally with the disc motor (not shown) is, for example, under the CD standard, the light beam having the wavelength of 780 nm is output from a second light emitting unit (not described) of the second LD 23. At this time, a predetermined voltage is applied between the electrodes 39a and 39e such that the active polarization converting element 39 functions as a λ/4 plate in which the direction of polarization is suitable for the light beam having the wavelength of 780 nm.

The light beam having the wavelength of 780 nm is reflected at the PBS 33, collimated by the collimator 35, passed through the second splitter 37 and the active polarization converting element 39, and condensed in a predetermined spot size on the recording layer of the optical disc D by the objective lens 31.

The light beam reflected on the recording layer of the optical disc D is captured by the objective lens 31 and returned to the parallel light, which is passed through the active polarization converting element 39, reflected to the PD 43 by the second splitter 37, and given a predetermined image-forming characteristic by the image-forming optical system 41 to form an image on the PD 43.

By providing the active polarization converting element 39 at a predetermined position between the objective lens 31 and the PBS 33 and applying a predetermined voltage between the electrodes 39a and 39e, most parts of the light beam emitted from a second light emitting point of the second LD 23 and the light beam reflected on the recording layer of the optical disc D are efficiently passed through the active polarization converting element 39. In addition, since the reflected light beam is passed through the second splitter 37 at a predetermined rate, a certain quantity of reflected light beam reaches the PBS 33. However, since the reflected light beam is also passed through the PBS 33, the reflected light beam is rarely made incident on the second LD 23 again. Therefore, the intensity (quantity) of the light beam output from the second LD 23 is stably maintained together with restriction of a component inducing noise.

In addition, since the quantity of the reflected light beam reflected on the second splitter 37 and guided to the PD 43 also becomes substantially maximum, the S/N is enhanced (improved) and the reproduction signal from the optical disc is also stabilized.

FIG. 2 is a schematic illustration showing an example of the active polarization converting element incorporated in the PUH of the optical disc drive shown in FIG. 1.

In the active polarization converting element 39, the liquid crystal layer 39c having a predetermined thickness is provided between the first polarizing plate 39b and the second polarizing plate 39d having the directions of polarization orthogonal to each other. A direction of the liquid crystal contained in the liquid crystal layer 39c is varied by the voltage applied between the electrodes 39a and 39e provided outside the polarizing plates.

Therefore, the active polarization converting element 39 has an effect of changing the direction of polarization (i.e. controlling the rotation) to the same degree as that in a case where the thickness of the λ/4 plate (wavelength plate), by varying the voltage applied between the electrodes 39a and 39e.

If the wiring between the electrodes 39a, 39e and the polarization control circuit 6 is, for example, integrated with a wiring material used as a feeder for a track control coil or focus control coil (not shown) provided at the actuator, increase in the added members and weight thereof is very small as compared with a general actuator. In addition, the wiring between the electrodes 39a, 39e and the polarization control circuit 6 can also be employed as the feeder for the coil, with improvements such as using frequency bands different in signal mode, using a pulse-form signal as the signal supplied to the active polarization converting element 39, and the like.

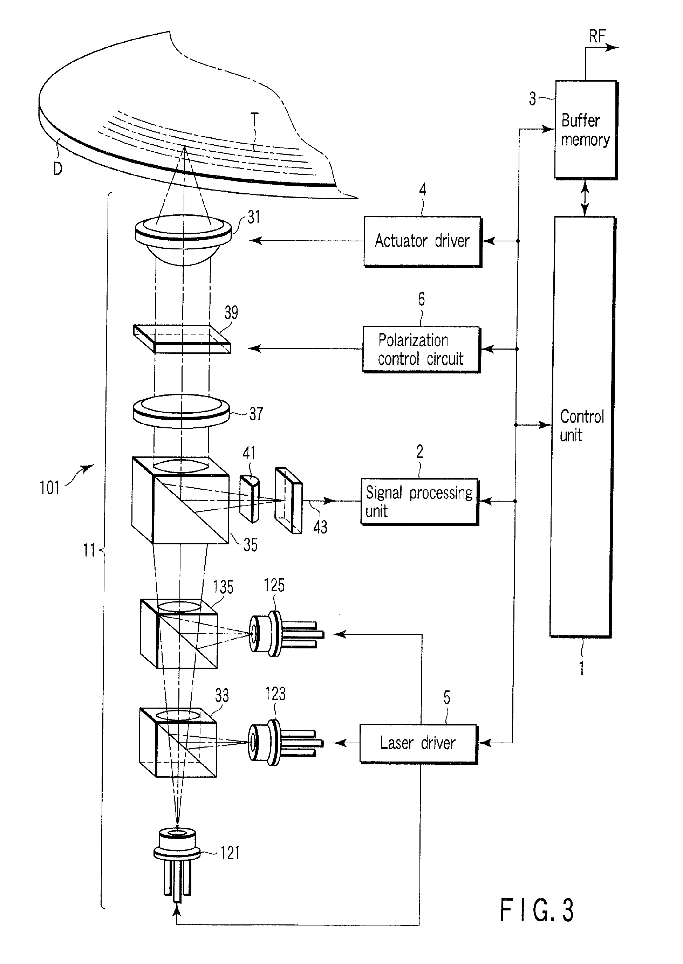

Moreover, as shown in FIG. 3, the first LD 121 (having the wavelength of 405 nm), second LD 123 (having the wavelength of 655 nm), and third LD 125 (having the wavelength of 780 nm) may be provided in the optical disc drive shown in FIG. 1, as light sources incorporated to the PUH. In the example shown in FIG. 3, as the light sources increase, a third splitter (prism mirror) 135 may be inserted between the PBS 33 and the second splitter 37.

According to the embodiment of the present invention as described above, fluctuation of the reproduced signal depending on the wavelength of the light beam, which cannot be avoided upon using the optical pickup (PUH) comprising one objective lens and one wavelength plate to store information on or reproduce information from each of three kinds of optical discs in different formats represented by the CD standard, DVD standard and HD DVD standard, can be restricted to the minimum level for each of the wavelengths of the light beam.

In addition, according to the embodiment of the present invention, the intensity of the reproduced signal obtained from each of three kinds of optical discs different in format represented by the CD standard, the DVD standard and the HD DVD standard is maximized (stabilized) in each wavelength of the light beam and the S/N is improved (i.e. the light use efficiency is enhanced).

Thus, the small and lightweight PUH that stores information on or reproduces information from each of three kinds of optical discs in different formats represented by the CD standard, DVD standard and HD DVD standard can be provided. In addition, the elements resulting from individual difference of the light sources can be reduced and the yield of the PUH is thereby improved.

## Claims

1. An optical head unit (11) **characterized by** comprising:
a light source (21, 23, 121, 123, 125) which outputs a light beam having a predetermined wavelength;
an object lens (31) which condenses the light beam having the predetermined wavelength output from the light source to a recording layer of a recording medium, and captures a light beam reflected on the recording layer of the recording medium;
a polarizing element (39) arranged between the light source and the objective lens, to optimize directions of polarization of the light beam having the predetermined wavelength output from the light source and the light beam reflected on the recording layer of the recording medium, in accordance with the wavelength thereof, on the basis of a voltage to be applied;
a photodetector (43) which receives the reflected light beam captured by the objective lens and outputs a predetermined signal; and
a polarizing element control circuit (6) which varies the direction of polarization set by the polarizing element, in accordance with the output of the photodetector.

2. The optical head unit according to claim 1, **characterized in that** the polarizing element includes a twisted nematic type liquid crystal element.

3. The optical head unit according to claim 2, **characterized by** further comprising:
a signal line from the polarizing element control circuit to the polarizing element is shaped as a feed line to a member generating a thrust to move the objective lens in a radial direction of the recording medium and orthogonal to an extending direction of the recording layer of the recording medium.

4. The optical disc drive (101) **characterized by** comprising:
an optical head unit (11) include a light source (21, 23, 121, 123, 125) which outputs a light beam having a predetermined wavelength; an object lens (31) which condenses the light beam having the predetermined wavelength output from the light source to a recording layer of a recording medium, and captures a light beam reflected on the recording layer of the recording medium; a polarizing element (39) arranged between the light source and the objective lens, to optimize directions of polarization of the light beam having the predetermined wavelength output from the light source and the light beam reflected on the recording layer of the recording medium, in accordance with the wavelength thereof, on the basis of a voltage to be applied; a photo detector (43) which receives the reflected light beam captured by the objective lens and outputs a predetermined signal; and a polarizing element control circuit (6) which varies the direction of polarization set by the polarizing element, in accordance with the output of the photo detector; an actuator unit which holds the objective lens and moves the objective lens in a direction of the radial direction of the recording medium and a direction orthogonal to the recording surface of the recording medium;
an actuator unit driving circuit (4) which moves the actuator unit in a direction of the radial direction of the recording medium and a direction orthogonal to the recording surface of the recording medium; and
a rotating device which rotates the recording medium at a predetermined speed.

5. The optical disc drive according to claim 4, **characterized in that** the polarizing element includes a twisted nematic type liquid crystal element.

6. The optical disc drive according to claim 5, **characterized by** further comprising:
a signal line from the polarizing element control circuit to the polarizing element is shaped as a feed line to a member generating a thrust to move the objective lens in a radial direction of the recording medium and orthogonal to an extending direction of the recording layer of the recording medium.

7. An optical head unit (11), **characterized by** comprising:
an optical pickup including an object lens (31) which condenses a light beam reflected on a recording layer of a recording medium;
a first light source (121) which outputs a light beam having a first wavelength to the objective lens;
a second light source (123) which outputs a light beam having a second wavelength longer than the first wavelength of the light beam output from the first light source, to the objective lens;
a third light source (125) which outputs a light beam having a third wavelength longer than the second wavelength of the light beam output from the second light source, to the objective lens;
a polarization control element (39) provided at a predetermined position in a common optical path through which the light beam output from the first light source, the light beam output from the second light source, and the light beam output from the third light source, pass toward the objective lens, to control a passage amount of each of the light beams having the first to third wavelengths to be maximum;
a photodetector (43) receives the reflected light beam captured by the objective lens and outputs a predetermined signal; and
a polarization control circuit (6) which varies the direction of polarization set by the polarization control element, in accordance with the output of the photodetector.

8. The optical head unit according to claim 7,
**characterized in that** the polarization control element includes a twisted nematic type liquid crystal element, and the polarization control circuit varies a voltage to be applied to the polarization control element to maximize the output of the photodetector by each wavelength.

9. The optical head unit according to claim 7, **characterized in that** the polarization control element includes a twisted nematic type liquid crystal element, and the polarization control circuit varies a voltage to be applied to the polarization control element to urge the output of the photodetector to have the most stable output waveform by each wavelength.
